# EUROPEAN PATENT APPLICATION

(11) **EP 3 998 319 A1**
(43) Date of publication of application: **18.05.2022**
(21) Application number: 20865365.9
(22) Date of filing: 17.09.2020
(51) Int. Cl.: C09J 133/04, C09J 7/20, C09J 7/38, C09J 4/00, C08F 2/22, C08F 220/18, C08F 220/26, C08F 220/04, C08F 218/04, C08F 214/00

(54) **ACRYLIC EMULSION ADHESIVE COMPOSITION**

(30) Priority: 17.09.2019 KR 20190114306; 16.09.2020 KR 20200119286
(71) Applicant: LG Chem, Ltd., Seoul 07336 (KR)
(72) Inventor: UH, Kyungchan, Daejeon 34122 (KR); RYU, Jin Young, Daejeon 34122 (KR); KIM, Eunsuk, Daejeon 34122 (KR); LEE, Yong Man, Daejeon 34122 (KR)
(74) Representative: Goddar, Heinz J.
(86) International application number: PCT/KR2020/012539
(87) International publication number: WO 2021/054733

(57) **Abstract**

The present disclosure relates to an acrylate-based emulsion pressure-sensitive adhesive composition. According to the present disclosure, it is possible to provide an acrylate-based emulsion pressure-sensitive adhesive composition having excellent adhesion over a wide temperature range by combining a specific monomer and a cross-linking agent and optimizing their content.

## Description

### BACKGROUND OF THE INVENTION

### (a) Field of the Invention

### CROSS-REFERENCE TO RELATED APPLICATION(S)

This application claims the benefits of Korean Patent Applications No. 10-2019-0114306 filed on September 17, 2019 and No. 10-2020-0119286 filed on September 16, 2020 with the Korean Intellectual Property Office, the disclosure of which is incorporated herein by reference in its entirety.

The present disclosure relates to an acrylate-based emulsion pressure-sensitive adhesive composition.

### (b) Description of the Related Art

Recently, sticker-type surface finishing materials such as interior/exterior materials of buildings, interior design materials, advertising materials, and the like to which pressure-sensitive adhesive (PSA) is applied have been increasingly used. Conventional oil-based adhesives incur discharge of residual solvents into air for a long period of time after construction, and thus residents of buildings suffer symptoms such as headache, eye, nose and throat irritation, cough, itching, dizziness, fatigue, reduction in concentration, and the like. When exposed to such residual solvents for a long period of time, a problem of sick house syndrome that causes respiratory ailments, heart disease, cancer, and the like may occur.

For such reasons, aqueous emulsion pressure-sensitive adhesives, which use water as a dispersion medium, are environmentally friendly, and do not discharge harmful materials, have received much attention and are rapidly replacing the conventional oil-based adhesives. Such aqueous emulsion pressure-sensitive adhesives may use polymers having higher molecular weight than that of solvent-based polymers because a viscosity of the adhesive is not related to a molecular weight of the polymer, and may have broad concentration ranges of solid content. In addition, they may have low aging resistance, low viscosity, and good adhesion in a low solid content region, and have good compatibility with other polymers.

In addition, as the environment in which the pressure-sensitive adhesive is used has recently been diversified, the demand for a pressure-sensitive adhesive having excellent adhesion at low temperatures and excellent holding power in addition to the above-described general adhesion at room temperature is increasing.

Conventional techniques have solved initial adhesion, adhesion, and cohesion at room temperature of the aqueous emulsion pressure-sensitive adhesive to some extent, but they do not provide an adhesive having excellent adhesion at low temperatures and excellent holding power as well as the above-described properties. This is because there is a trade-off between the adhesion at room temperature and the adhesion at low temperatures in the emulsion pressure-sensitive adhesive having a specific glass transition temperature. In the case of an emulsion pressure-sensitive adhesive composition exhibiting adhesive properties at room temperature, it is difficult to satisfy the adhesion both at room temperature and at low temperatures because adhesive properties generally decrease at low temperatures.

Accordingly, a method of using a polymeric binder with a low glass transition temperature to improve the adhesion at low temperatures while maintaining the adhesion at room temperature has been proposed, but most polymer binders with a low glass transition temperature exhibit non-polarity and increase non-polarity of the polymerized monomer, causing a problem of polymerization stability of pre-emulsion and emulsion pressure-sensitive adhesives.

Accordingly, there is a high need for an adhesive having excellent adhesion at room temperature and low temperatures.

### SUMMARY OF THE INVENTION

### [Technical Problem]

In the present disclosure, there is provided an acrylate-based emulsion pressure-sensitive adhesive composition excellent in adhesion both at room temperature and low temperatures.

### [Technical Solution]

In the present disclosure, there is provided an acrylate-based emulsion pressure-sensitive adhesive composition, including emulsified polymer particles obtained by emulsion polymerization of a monomer mixture containing an alkyl (meth)acrylate-based monomer, a hydroxyalkyl (meth)acrylate-based monomer, an unsaturated carboxylic acid-based monomer, and a vinyl-based monomer; and a polyalkylene glycol diacrylate-based cross-linking agent,
wherein a viscoelastic ratio (Tan delta, G"/G') measured at a temperature of 25°C in the range of 5.0*10⁻² to 1.0*10² rad/sec is 0.5 to 0.8.

### [Advantageous Effects]

According to the present disclosure, there is provided an acrylate-based emulsion pressure-sensitive adhesive composition excellent in adhesion both at room temperature and low temperatures by optimizing a combination of a specific monomer and a cross-inking agent to achieve a balance between viscosity and elasticity.

### BRIEF DESCRIPTION OF THE DRAWINGS

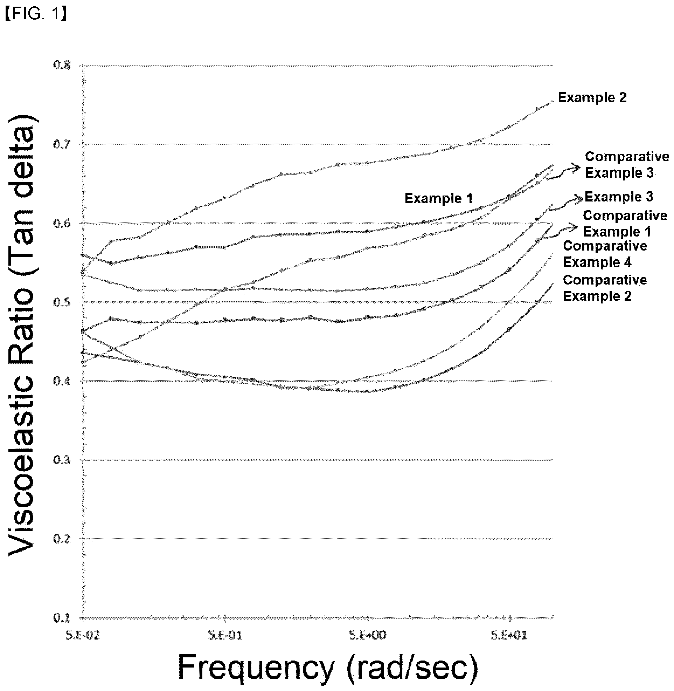

FIG.1 is a graph showing a viscoelastic ratio at various frequencies of the acrylate-based emulsion pressure-sensitive adhesive compositions prepared in Examples and Comparative Examples of the present disclosure.

### DETAILED DESCRIPTION OF THE EMBODIMENTS

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "contain" when used in this specification, specify the presence of stated features, numbers, steps, components, or combinations thereof, but do not preclude the presence or addition of one or more other features, numbers, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the acrylate-based emulsion pressure-sensitive adhesive composition according to a specific embodiment of the present disclosure will be described.

The present inventors have combined a specific monomer and a cross-linking agent in an acrylate-based emulsion pressure-sensitive adhesive composition containing an emulsion of latex particles prepared by emulsion polymerization of an acrylate-based monomer, etc., and optimized their content. This led to the present invention, focusing on the fact that a viscoelastic ratio is adjusted within a certain range to exhibit excellent adhesive properties at both room temperature and low temperatures, which are adhesive properties over a wide temperature range.

Specifically, the acrylate-based emulsion pressure-sensitive adhesive composition includes emulsified polymer particles obtained by emulsion polymerization of a monomer mixture containing an alkyl (meth)acrylate-based monomer, a hydroxyalkyl (meth)acrylate-based monomer, an unsaturated carboxylic acid-based monomer, and a vinyl-based monomer; and a polyalkylene glycol diacrylate-based cross-linking agent,
wherein a viscoelastic ratio (Tan delta, G"/G') measured at a temperature of 25°C in the range of 5.0*10⁻² to 1.0*10² rad/sec is 0.5 to 0.8.

First, the acrylate-based emulsion pressure-sensitive adhesive composition according to an embodiment of the present disclosure includes emulsified polymer particles of a specific monomer, that is, latex particles, and each monomer may exist in the form of a repeating unit derived from a monomer in the latex particle.

In the present disclosure, the monomer mixture for performing the emulsion polymerization process contains an alkyl (meth)acrylate-based monomer; a hydroxyalkyl (meth)acrylate-based monomer; an unsaturated carboxylic acid-based monomer; and a vinyl-based monomer.

In the present disclosure, the term "monomer mixture" refers to a state in which one or more monomers described below are mixed together with acrylate-based monomers, and the one or more monomers may be added together or sequentially. Thus, the preparation method thereof is not limited.

In order to satisfy the above-described viscoelastic ratio of 0.5 to 0.8, the acrylate-based emulsion pressure-sensitive adhesive composition according to an embodiment of the present disclosure includes 85 to 90 parts by weight of the alkyl (meth)acrylate-based monomer; 1 to 5 parts by weight of the hydroxyalkyl (meth)acrylate-based monomer; 1 to 5 parts by weight of the unsaturated carboxylic acid-based monomer; 1 to 5 parts by weight of the vinyl-based monomer; and 0.05 to 0.5 parts by weight of the polyalkylene glycol diacrylate-based cross-linking agent, based on 100 parts by weight of the monomer mixture.

In addition, the acrylate-based emulsion pressure-sensitive adhesive composition according to an embodiment of the present disclosure contains the hydroxyalkyl (meth)acrylate-based monomer, the unsaturated carboxylic acid-based monomer, and the vinyl-based monomer within a range in which each component satisfies the above-described parts by weight. In addition, the monomers are contained such that the relative content ratios thereof are similar to each other, and the ratios are preferably not more than 2 times.

For example, a weight ratio of two types of monomers selected from the hydroxyalkyl (meth)acrylate-based monomer, the unsaturated carboxylic acid-based monomer, and the vinyl-based monomer may preferably be 0.5 to 2, 0.7 to 1.8, 0.9 to 1.1.6, or 0.9 to 1:1.5. As described above, when the relative contents of the hydroxyalkyl (meth)acrylate-based monomer, the unsaturated carboxylic acid-based monomer, and the vinyl-based monomer are similar, the viscoelastic ratio of 0.5 to 0.8 is satisfied, and thus adhesive properties can be achieved both at room temperature and low temperatures.

Hereinafter, the acrylate-based emulsion pressure-sensitive adhesive composition according to an embodiment of the present disclosure will be described in more detail.

### a) The alkyl (meth)acrylate-based monomer

First, in the emulsion polymerization for preparing latex particles, an alkyl (meth)acrylate-based monomer may be used, and this may be referred to as a first monomer. Accordingly, the latex particle may include a repeating unit derived from an alkyl (meth)acrylate-based monomer, and this may be referred to as a first repeating unit.

The alkyl (meth)acrylate-based monomer is an alkyl (meth)acrylate-based monomer having a C1 to C14 alkyl group, that is, an alkyl group containing 1 to14 carbon atoms, and any material known in the art may be used without limitation. For example, the alkyl (meth)acrylate-based monomer may be at least one selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate, and these may be used alone or in combination of two or more thereof.

Specifically, one or two or more selected from methyl (meth)acrylate, ethyl (meth)acrylate, and 2-ethylhexyl (meth)acrylate may preferably be used.

The acrylate-based emulsion pressure-sensitive adhesive composition of the present disclosure requires a low glass transition temperature for adhesive properties at low temperatures, and contains 85 parts by weight or more of the alkyl (meth)acrylate-based monomer for this purpose.

For example, the alkyl (meth)acrylate-based monomer may be contained in an amount of 85 parts by weight or more, 87 parts by weight or more, 88 parts by weight or more, or 89 parts by weight or more, and 99 parts by weight or less, 97 parts by weight or less, or 95 parts by weight or less based on 100 parts by weight of the monomer mixture. When too little of the alkyl (meth)acrylate-based monomer is contained, there may be a problem in that adhesive properties are not exhibited at low temperatures. In addition, when too much of the alkyl (meth)acrylate-based monomer is contained, the transfer of the pressure-sensitive adhesive to the adherend occurs largely upon removal after use, and washing becomes difficult.

### b) The hydroxyalkyl (meth)acrylate-based monomer

Next, in the emulsion polymerization for preparing latex particles, a hydroxyalkyl (meth)acrylate-based monomer may be used, and this may be referred to as a second monomer. Accordingly, the latex particle may include a repeating unit derived from a hydroxyalkyl (meth)acrylate-based monomer, and this may be referred to as a second repeating unit.

The hydroxyalkyl (meth)acrylate-based monomer may contribute to improving adhesion and peel strength while imparting viscosity to the acrylate-based emulsion pressure-sensitive adhesive composition.

The hydroxyalkyl (meth)acrylate-based monomer may be at least one selected from the group consisting of 2-hydroxyethyl(meth)acrylate, 2-hydroxypropyl(meth)acrylate, 2-hydroxybutyl(meth)acrylate, 4-hydroxybutyl(meth)acrylate,6-hydroxyhexyl(meth)acrylate, 2-hydroxyethyleneglycol(meth)acrylate, and 2-hydroxypropyleneglycol(meth)acrylate, and these may be used alone or in combination of two or more thereof.

For example, the hydroxyalkyl (meth)acrylate-based monomer may be contained **in** an amount of 1parts by weight or more, 1.5 parts by weight or more, or 2 parts by weight or more, and 5 parts by weight or less, 4.5 parts by weight or less, or 4 parts by weight or less based on 100 parts by weight of the monomer mixture. When too much of the hydroxyalkyl (meth)acrylate-based monomer is used, the degree of cross-linking decreases, thereby reducing holding power and increasing viscosity significantly. When too little is used, the effect of increasing cohesion by hydrogen bonding of the hydroxyl group cannot be expected.

### c) The unsaturated carboxylic acid-based monomer

Next, in the emulsion polymerization for preparing latex particles, an unsaturated carboxylic acid-based monomer may be used, and this may be referred to as a third monomer. Accordingly, the latex particle may include a repeating unit derived from an unsaturated carboxylic acid-based monomer, and this may be referred to as a third repeating unit.

The unsaturated carboxylic acid-based monomer controls softness and hardness by controlling the degree of internal cross-linking of emulsified polymer particles, so that the acrylate-based emulsion pressure-sensitive adhesive composition can achieve appropriate viscoelastic properties.

The unsaturated carboxylic acid-based monomer may include at least one selected from the group consisting of acrylic acid, fumaric acid, maleic acid, itaconic acid, citraconic acid, mesaconic acid, glutaconic acid, and allylmalonic acid.

For example, the unsaturated carboxylic acid-based monomer may be contained in an amount of 1 parts by weight or more, 1.5 parts by weight or more, or 2 parts by weight or more, and 5 parts by weight or less, 4.5 parts by weight or less, or 4 parts by weight or less based on 100 parts by weight of the monomer mixture. When too much of the unsaturated carboxylic acid-based monomer is used, aging peel strength may increase even when stored for a long time at high temperatures, and when too little is used, adhesion may decrease.

### d) The vinyl-based monomer

Next, in the emulsion polymerization for preparing latex particles, a vinyl-based monomer may be used, and this may be referred to as a fourth monomer. Accordingly, the latex particle may include a repeating unit derived from a vinyl-based monomer, and this may be referred to as a fourth repeating unit.

The vinyl-based monomer controls the glass transition temperature, and improves a balance between adhesion, peel strength and holding power, while imparting elasticity to emulsified polymer particles.

The vinyl-based monomer may include at least one selected from the group consisting of a vinyl ester-based monomer having a C1 to C5 alkyl group; and an aromatic vinyl-based monomer.

The vinyl ester-based monomer may be an ester-based monomer having a vinyl group at one end of the molecule and a C1 to C5 alkyl group at the opposite end. Specifically, at least one selected from the group consisting of vinyl acetate, vinyl propanoate, vinyl butanoate, and vinyl pentanoate may be used.

In addition, the aromatic vinyl-based monomer may be at least one selected from the group consisting of styrene, methylstyrene, butylstyrene, chlorostyrene, vinylbenzoic acid, methyl vinylbenzoate, vinylnaphthalene, chloromethylstyrene, hydroxymethylstyrene, and divinylbenzene.

As the vinyl-based monomer, the above-described examples may be used alone or in combination of two or more thereof.

For example, the vinyl-based monomer may be contained in an amount of 1 parts by weight or more, 1.5 parts by weight or more, or 2 parts by weight or more, and 5 parts by weight or less, 4.5 parts by weight or less, or 4 parts by weight or less based on 100 parts by weight of the monomer mixture. When too much of the vinyl-based monomer is used, stability may be deteriorated, and when too little is used, there may be a problem in that adhesion is reduced.

### e) The internal cross-linking agent

The emulsified polymer particles of the present disclosure are obtained by emulsion polymerization of the above-described monomer mixture with a polyalkylene glycol diacrylate-based cross-linking agent as an internal cross-linking agent. The internal cross-linking agent is a component most fundamentally added to the reaction mixture to enhance cohesion, has high holding power (shear), and functions to connect long polymer chains, thereby increasing a net effect. The most important feature of the holding power (shear) is that cohesion between polymers is large, and this helps the dried latex to be firmly fixed without being peeled off easily.

For example, the polyalkylene glycol diacrylate-based cross-linking agent may be contained in an amount of 0.05 parts by weight or more, 0.1 parts by weight or more, or 0.15 parts by weight or more, and 0.5 parts by weight or less, 0.4 parts by weight or less, or 0.3 parts by weight or less based on 100 parts by weight of the monomer mixture. When too little of the polyalkylene glycol diacrylate-based cross-linking agent is used, adhesion may decrease due to a decrease in the degree of cross-linking, and when too much is used, the degree of cross-linking may increase excessively, resulting in a decrease in polymerization stability and agglomeration of latex particles.

Meanwhile, according to an embodiment of the present disclosure, the monomer mixture may contain an additive without particular limitation within the range that does not reduce the desired effect of the invention in addition to the above-described components. For example, the additive may include an external cross-linking agent, a buffer, a wetting agent, a neutralizing agent, a polymerization terminator, a tackifier, and the like, and may include one or two or more thereof.

As the external cross-linking agent, diacetone acrylamide (DAAM) and adipic acid dihydride (ADH) may be used to design the cross-linking reaction to additionally occur externally. The external cross-linking agent is added later at the end of the polymerization and functions as an intercross linker for connecting polymers. The external cross-linking agent may be used in an amount of about 1.2 parts by weight or less or about 0 to about 1.2 parts by weight, or about 0.7 parts by weight or less or about 0.01 parts by weight to about 0.7 parts by weight, based on 100 parts by weight of the monomer mixture.

The buffer may be sodium bicarbonate, sodium carbonate, sodium phosphate, sodium sulfate, sodium chloride, or the like, but the present disclosure is not limited thereto. In addition, these may be used alone or in combination of two or more thereof. The buffer may adjust the pH in the polymerization reaction and impart stability to polymerization. The buffer may be used in an amount of about 1.0 parts by weight or less or about 0 to about 1.0 parts by weight, or about 0.5 parts by weight or less or about 0.1 parts by weight to about 0.5 parts by weight, based on 100 parts by weight of the monomer mixture.

The wetting agent functions as an emulsifier that lowers surface tension for coating property, and may be used within a content range well known in the art. For example, the wetting agent may be a dioctyl sodium sulfosuccinate(DOSS)-based compound. The wetting agent may be used in an amount of about 1.0 parts by weight or less or about 0 to about 1.5 parts by weight, or about 1.2 parts by weight or less or about 0.1 parts by weight to about 1.2 parts by weight, based on 100 parts by weight of the monomer mixture.

Examples of the neutralizing agent may include NaOH, NH₄OH, and KOH. The neutralizing agent may be used in an amount of about 1.0 parts by weight or less or about 0 to about 1.0 parts by weight, or about 0.5 parts by weight or less or about 0.1 parts by weight to about 0.5 parts by weight, based on the monomer mixture.

In addition, the polymerization terminator is added to suppress a side reaction of radicals and residual monomers remaining after the production of latex, that is, acrylate-based emulsion resin, and is an additive that removes the radical to eliminate the additional reaction. The polymerization terminator may also be referred to as a radical inhibitor. It is also referred to simply as an inhibitor. The polymerization terminator is used in order to stop the polymerization reaction by rapidly reacting with radicals, a polymerization initiator or a monomer, to lose characteristics of radical, or in order to preserve a monomer because the radical polymerizable monomer is naturally polymerized when left in a pure state. It is also called as a polymerization inhibitor. However, even if the inhibitor is added, when a certain amount of time passes, it is consumed in between, so that the polymerization is naturally initiated. Representative inhibitors are hydroquinone and p-tert-butylcatechol. Benzoquinone, chloranil, m-dinitrobenzene, nitrobenzene, p-phenyldiamine, sulfur, and the like are easily reacted with radicals and stabilized. Diphenylpicrylhydrazyl, Di-P-fluorophenylamine and tri-P-nitrophenylmethyl which are stable radicals are also used as inhibitors. Preferably, NaNO₂ may be used as the polymerization terminator. The polymerization terminator may be used in an amount of about 1.0 parts by weight or less or about 0 to about 1.0 parts by weight, or about 0.5 parts by weight or less or about 0.1 parts by weight to about 0.5 parts by weight, based on the monomer mixture.

In addition, the tackifier is added to lower surface tension by further adding an emulsifier. In this case, a small amount of dioctyl sodium sulfosuccinate(DOSS)-based compound may be used to significantly lower the surface tension. The tackifier may be used in an amount of about 1.5 parts by weight or less or about 0 to about 1.5 parts by weight, about 1.2 parts by weight or less, about 0.8 parts by weight or less, or about 0.1 to about 0.6 parts by weight, based on 100 parts by weight of the monomer mixture.

Meanwhile, the monomer mixture may further include a molecular weight regulator, which functions as a chain transfer agent (CTA) during the polymerization reaction of the acrylate-based emulsion resin, and is attached to the end of the molecule to move radicals to another place.

In order for the polymerization process to be performed smoothly, the order in which each component is added may be different. For example, it may be desirable to first dissolve additives such as a surfactant and a buffer in water by stirring at the beginning of the polymerization process, and then add a monomer mixture of a monomer, an emulsifier and an internal cross-linking agent while stirring.

According to an embodiment of the present disclosure, the polymerization composition may further contain an aqueous solvent such as water in addition to the above-described components.

Herein, the aqueous solvent may be used in an amount of about 10 to about 1,000 parts by weight based on 100 parts by weight of the monomer mixture, in terms of stability and viscosity control of latex particles. For example, the aqueous solvent may be used such that a total solid content (TSC) is adjusted to about 10 to about 60 wt% based on a total amount of the composition.

Emulsified polymer particles, that is, latex particles, included in the aqueous pressure-sensitive adhesive composition according to an embodiment of the present disclosure may be prepared by a generally known emulsion polymerization method.

Specifically, the preparation method of the aqueous pressure-sensitive adhesive composition may include the steps of preparing a monomer mixture containing a (meth)acrylic acid ester-based monomer having a C1 to C14 alkyl group, a vinyl-based monomer, a (meth)acrylic acid-based monomer, and a (meth)acrylic ester-based monomer having a hydroxyl group; preparing a polymerization composition by adding an emulsifier to the monomer mixture; and performing emulsion polymerization of the polymerization composition in the presence of a polymerization initiator.

The emulsifier is used to generate initial particles during polymerization of the monomer mixture, control the size of the generated particles, and impart stability to the particles. The emulsifier may include at least one emulsifier of a nonionic emulsifier and an anionic emulsifier.

The emulsifier is a material having a hydrophilic group and a hydrophobic group at the same time, and forms a micelle structure in the emulsion polymerization process, and allows polymerization of each monomer in the micelle structure.

The emulsifier generally used in the emulsion polymerization can be classified into an anionic emulsifier, a cationic emulsifier, and a nonionic emulsifier, and two or more types thereof are mixed and used in terms of polymerization stability in the emulsion polymerization.

Specifically, the anionic emulsifier may include at least one selected from the group consisting of sodium alkyldiphenyloxide disulfonate-based compounds, sodium polyoxyethylene alkyl ether sulfate-based compounds, and sodium dialkyl sulfosuccinate-based compounds.

In addition, the nonionic emulsifier may be at least one selected from the group consisting of a dialkylene glycol alkyl ether-based compound having a C2 to C5 alkylene group and a C5 to C15 alkyl group; a dialkylene glycol alkyl ester-based compound having a C2 to C5 alkylene group and a C5 to C15 alkyl group; and a dialkylene glycol alkyl amine-based compound having a C2 to C5 alkylene group and a C5 to C15 alkyl group, and these may be used alone or in combination of two or more thereof. Although using a mixture of an anionic emulsifier and a nonionic emulsifier may be more effective, the present disclosure is not necessarily limited to the types of these emulsifiers.

In addition, the emulsifier may be used in an amount of about 0.01 to about 1parts by weight, or about 0.01 to about 0.5 parts by weight based on 100 parts by weight of the monomer mixture.

When too little emulsifier is used, the size of latex particles to be prepared may increase, and polymerization stability may decrease. When too much is used, the size of latex particles to be prepared may become too small, or adhesive properties of the emulsion adhesive may be deteriorated.

Examples of the polymerization initiator may include a water-soluble polymerization initiator such as ammonium or alkali metal persulfate, for example, ammonium persulfate, hydrogen peroxide, peroxide, hydroperoxide, and the like. Herein, the polymerization initiator may be used in an amount of about 1.0 parts by weight or less or 0 to 1.0 parts by weight, 0.6 parts by weight or less or 0.01 to 0.6 parts by weight, 0.45 parts by weight or less or 0.1 to 0.45 parts by weight, or 0.4 parts by weight or less or 0.5 to 0.4 parts by weight based on 100 parts by weight of the monomer mixture.

In the polymerization of the monomer mixture, the polymerization initiator may be used by being appropriately divided one or more times within the above-mentioned range. However, when the polymerization initiator is added at the beginning of polymerization before the pre-emulsion containing an emulsifier is added to the monomer mixture, it is preferable to add the polymerization initiator in an amount of about 0.2 parts by weight or less or about 0 to 0.2 parts by weight, about 0.1 parts by weight or less or about 0 to 0.1 parts by weight, or about 0.05 parts by weight or less or about 0 to 0.05 parts by weight so as to minimize the possibility that a residual problem may occur. Preferably, the polymerization initiator may be added simultaneously with the pre-emulsion dividedly or continuously over a time up to about 70% of the total polymerization time.

In addition, an activator may be further contained to accelerate the initiation of the reaction of the peroxide together with the polymerization initiator, and at least one selected from the group consisting of sodium formaldehyde sulfoxylate, sodium ethylenediamine tetraacetate, ferrous sulfate, and dextrose may be used.

During the emulsion polymerization, the polymerization temperature and polymerization time may be appropriately determined depending on the case. For example, the emulsion polymerization may be performed for about 3 hours to about 6 hours at a temperature of about 70 to 90 °C. In consideration of physical properties of the pressure-sensitive adhesive, the polymerization temperature may be about 75 to about 85 °C.

The acrylate-based emulsion pressure-sensitive adhesive composition prepared by the above-described method has a viscoelastic ratio (Tan delta) measured at a temperature of 25°C in the range of 5.0*10⁻² to 1.0*10² rad/sec of 0.5 to 0.8 in the entire frequency range. The viscoelastic ratio is the ratio (G"/G')of loss modulus (G") to storage modulus (G'), and a value greater than 1 means that viscosity is stronger than elasticity.

As the viscosity of the acrylate-based emulsion pressure-sensitive adhesive composition becomes stronger, adhesion increases and improves, whereas cohesion decreases, thus the holding power is lowered and bleeding may occur. On the contrary, as the viscosity of the acrylate-based emulsion pressure-sensitive adhesive composition becomes weaker and elasticity becomes stronger, the cohesion increases and bonding between polymer chains inside the pressure-sensitive adhesive composition is strengthened, but overall adhesive properties may be deteriorated due to a decrease in adhesion. As described above, the acrylate-based emulsion pressure-sensitive adhesive composition of the present disclosure may exhibit the viscoelastic ratio within the above-described range by controlling the type and content of the monomers and the internal cross-linking agent contained in the emulsified polymer particles.

As the glass transition temperature of the composition decreases, the adhesive strength increases and the loss modulus increases, resulting in an increase in the viscoelastic ratio of the acrylate-based emulsion pressure-sensitive adhesive composition. On the other hand, as the glass transition temperature of the composition increases, the cohesive strength increases and the storage modulus increases, resulting in a decrease in the viscoelastic ratio. Therefore, as the viscoelasticity ratio increases, the adhesive properties at low temperatures tend to increase, while the adhesive properties at room temperature tend to decrease. Conversely, as the viscoelasticity ratio decreases, the adhesive properties at low temperatures tend to decrease and the adhesive properties at room temperature tend to increase. However, the viscoelastic ratio of the acrylate-based emulsion pressure-sensitive adhesive composition is not determined only by the glass transition temperature, but is complexly determined by the particle size, molecular weight, and degree of cross-linking of the composition. An appropriate balance of the above factors gives a certain viscoelastic ratio.

The relationship between the viscoelastic ratio and the adhesive properties at various temperatures of the acrylate-based emulsion adhesive composition was unknown. The present inventors have found that when the viscosity and elasticity of emulsified polymer particles are properly balanced, and the viscoelasticity ratio is in a certain range as described above, the acrylate-based emulsion adhesive composition can exhibit excellent adhesive properties over a wide temperature range including both room temperature and low temperatures.

The acrylate-based emulsion pressure-sensitive adhesive composition according to an embodiment of the present disclosure has a viscoelastic ratio (Tan delta, G"/G') measured at a temperature of 25°C in the range of 5.0*10⁻² to 1.0*10² rad/sec of 0.5 or more, 0.51 or more, 0.52 or more, or 0.53 or more, and 0.8 or less, 0.79 or less, 0.78 or less, or 0.77 or less. The viscoelastic ratio of the acrylate-based emulsion pressure-sensitive adhesive composition of the present disclosure satisfies the above-described range in the entire frequency range of 5.0*10⁻² to 1.0*10².

In addition, the acrylate-based emulsion pressure-sensitive adhesive composition has storage modulus (G') at a temperature of 25°C and 5.0*10⁻² rad/sec of 2.0*10³Pa or moreto1.5*10⁴Pa or less, or 4.0*10³Pa or more to1.2*10⁴Pa or less, and storage modulus (G') at a temperature of 25°C and 1.0*10² rad/secof5.0*10⁴Pa or more to 1.5*10⁵Pa or less, or 7.0*10⁴Pa or more to 1.3*10⁵Pa or less.

In addition, the acrylate-based emulsion pressure-sensitive adhesive composition has loss modulus(G")at a temperature of 25°C and 5.0*10⁻² rad/sec of 1.0*10³Pa or moreto1.0*10⁴Pa or less, or 3.0*10³Pa or more to8.0*10³Pa or less, and loss modulus(G")at a temperature of 25°Cand 1.0*10² rad/secof2.0*10⁴Pa or more to 1.0*10⁵Pa or less, or 4.0*10⁴Pa or more to 8.0*10⁴Pa or less.

The acrylate-based emulsion pressure-sensitive adhesive composition may have loop tack at room temperature (22±2°C)on a SUS substrate of 10 N/inch or more, 11 N/inch or more, or 12 N/inch or more, and 16 N/inch or less, 15 N/inch or less, or 14 N/inch or less. Herein, the loop tack at room temperature (22±2°C)on a SUS substrate can be measured in accordance with FINAT TEST METHOD NO. 9. For example, the specimen is formed into a loop and fixed with clamps, and then attached to a stainless steel surface (SUS 304) at a constant speed. After about 5 seconds, the maximum force required for separation in the opposite direction at a measuring speed of about 300 mm/min is measured as loop tack peel strength.

The acrylate-based emulsion pressure-sensitive adhesive composition may have loop tack at room temperature (22±2°C)on a paper substrate of 6 N/inch or more,6.5 N/inch or more, or 7 N/inch or more, and 10 N/inch or less, 9 N/inch or less, or 8 N/inch or less. Herein, the loop tack at room temperature (22±2°C)on a paper substrate can be measured in accordance with FINAT TEST METHOD NO. 9. For example, the specimen is formed into a loop and fixed with clamps, and then attached to a paper substrate at a constant speed. After about 5 seconds, the maximum force required for separation in the opposite direction at a measuring speed of about 300 mm/min is measured as loop tack peel strength.

The acrylate-based emulsion pressure-sensitive adhesive composition may have loop tack at low temperatures(-10±2°C)on a paper substrate of 5.5 N/inch or more,6 N/inch or more, or 6.5 N/inch or more, and 10 N/inch or less, 9.5 N/inch or less, or 9 N/inch or less. Herein, the loop tack at low temperatures(-10±2°C)on a paper substrate can be measured in accordance with FINAT TEST METHOD NO. 9. For example, the specimen is formed into a loop and fixed with clamps, and then attached to a paper substrate at a constant speed. After about 5 seconds, the maximum force required for separation in the opposite direction at a measuring speed of about 300 mm/min is measured as loop tack peel strength.

The acrylate-based emulsion pressure-sensitive adhesive composition may also have peel strength (90°) of 7 N/inch or more, 7.5 N/inch or more, or 8 N/inch or more, and 10 N/inch or less, 9 N/inch or less, or 9.5 N/inch or less. Herein, the peel strength can be measured in accordance with FINAT TEST METHOD NO. 2. For example, an acrylate-based emulsion pressure-sensitive adhesive specimen is attached to a stainless steel surface (SUS 304) by reciprocating a 2 kg roller once at about 300 mm/min and aged at room temperature for about 20 minutes. Thereafter, the aged adhesive specimen is subjected to 90° peeling at about 300 mm/min to measure the peel strength using a TA Texture Analyzer.

The acrylate-based emulsion pressure-sensitive adhesive composition may also have holding power(shear) of 30 to 100 min/0.5inch • 0.5kg, about 30 to 60 min/0.5inch • 0.5kg, or about 35 to 50 min/0.5inch • 0.5kg. Herein, the holding power(shear) can be measured by a holding power test (shear test). For example, a bright stainless steel plate (Bright SUS, polished and slippery) is prepared. Then, each pressure-sensitive adhesive specimen is attached to the adherend by reciprocating a 2 kg roller twice, and the holding power is measured after 20 minutes of dwell time. After a fixed load of about 0.5 kg is applied to the bottom of the specimen, the time at which the pressure-sensitive adhesive specimen is separated is measured.

The acrylate-based emulsion pressure-sensitive adhesive composition prepared according to the preparation method of the present disclosure may be applied to a pressure-sensitive adhesive for paper, and more specifically, for an adherend such as a delivery box, corrugated cardboard, an egg box, and the like, but the present disclosure is not limited thereto.

Hereinafter, the function and effect of the present invention will be described in more detail through specific examples of the present invention. However, these examples are for illustrative purposes only, and the invention is not intended to be limited by these examples.

### <Examples>

### Example 1

After preparing a pre-emulsion by mixing a monomer mixture, an internal cross-linking agent, and water as follows, the pre-emulsion was emulsion-polymerized to prepare an acrylate-based emulsion resin.

First, about 208.2 g of water and about 2.1 g of sodium polyoxyethylene lauryl ether sulfate as a first surfactant were added to a 3L glass reactor equipped with a thermometer, a stirrer, a dropping funnel, a nitrogen inlet tube and a reflux condenser, and the inside of the reactor was replaced with nitrogen while stirring. Thereafter, the temperature was raised to about 80 °C under a nitrogen atmosphere and maintained for about 60 minutes.

In a separate beaker, about825.2 g of 2-ethylhexylacrylate (2-EHA), about 13.6 g of methyl methacrylate (MMA), about 27.3 g of styrene (SM), about 28.1 g of acrylic acid (AA), and 13.6 g of 2-hydroxyethyl acrylate (HEA) were added and mixed for about 30 minutes to prepare 907.8 g of a monomer mixture. Thereafter, a solution containing about 1.8 g of polyethylene glycol diacrylate (M280) as an internal cross-linking agent, about 34.6 g of about 26 wt% sodium polyoxyethylene lauryl ether sulfate as a first surfactant, about 3.9 g of alkyldiphenyloxide disulfonate as a second surfactant, about 1.8 g of sodium carbonate as a buffer, about 1.8 g of sodium methylallyl sulfonate as a third surfactant, and about 231.3 g of water was added to the monomer mixture, and mixed with a stirrer to prepare a milky pre-emulsion.

About 10 g of about 5 wt% ammonium persulfate was added to the 3 L glass reactor containing the surfactant, followed by stirring for about 10 minutes to dissolve. The pre-emulsion prepared above and about 150g of an about 5 wt% ammonium persulfate aqueous solution were continuously and evenly added to the glass reactor for about 5 hours, and then the temperature was maintained at about 80°C for about 1 hour. Thereafter, an about 10 wt% aqueous ammonia solution was added thereto to adjust the pH to about 7 to about 8.5. Thereafter, about 1 part by weight of dioctyl sodium sulfosuccinate was added as a wetting agent based on 100 parts by weight of the acrylate-based emulsion resin, and cooled down to room temperature to prepare an acrylate-based emulsion resin for a pressure-sensitive adhesive, wherein the wetting agent acts as an emulsifier that lowers surface tension for coating properties.

### Examples 2 to 3 and Comparative Examples 1 to 2

An acrylate-based pressure-sensitive adhesive composition was prepared in the same manner as in Example 1, except that a composition of the monomer mixture was changed.

### Comparative Example 3

An acrylate-based pressure-sensitive adhesive composition was prepared in the same manner as in Example 1of KR Publication No. 2016-0019652.

### Comparative Example 4

An acrylate-based pressure-sensitive adhesive composition was prepared in the same manner as in Example 1of KR Publication No. 2016-0050979.

The compositions of the monomer mixtures of Examples 1 to 3 and Comparative Examples 1 to 4 are summarized in Table 1 below.

**[Table 1]**

| | | Ex. 1 | Ex. 2 | Ex. 3 | Comp. Ex. 1 | Comp. Ex.2 | Comp. Ex.3 | Comp. Ex.4 |
|---|---|---|---|---|---|---|---|---|
| Monomer (wt%) | 2-EHA | 91.5 | 90.5 | 89 | 85.0 | 94 | 92 | 56 |
| | BA | - | - | - | 9.0 | - | - | 20 |
| | MMA | 1.5 | 2 | 2.5 | 1.5 | 1.5 | 2.2 | 10 |
| | SM | 3 | 2.5 | 2 | 2.5 | 2.5 | - | - |
| | 2-HEA | 1.5 | 2.5 | 3 | - | - | 2.8 | 3 |
| | AA | 2.5 | 2.5 | 2 | 2.0 | 2.0 | 1 | 1 |
| | VAc | - | - | 1.5 | | | 2 | 10 |
| | SUM | 100 | 100 | 100 | 100 | 100 | 100 | 100 |
| M280 (based on 100 parts by weight of monomer mixture) | M280 | 0.2 | 0.2 | 0.2 | 0.2 | 0.2 | 0.15 | 0.15 |
| n-DDM (based on 100 parts by weight of monomer mixture) | - | - | - | - | - | - | 0.05 | 0.05 |

| | | | | | | | | |
|---|---|---|---|---|---|---|---|---|
| BA: Butyl acrylate 2-EHA: 2-ethylhexylacrylate SM: Styrene MMA: methyl methacrylate AA: acrylic acid VAc: Vinyl acetate M280: Polyethylene glycol 400 diacrylate (PEGDA) n-DDM: Normal dodecyl mercaptan | | | | | | | | |

### Measurement of storage modulus, loss modulus, and viscoelastic ratio

The pressure-sensitive adhesive composition prepared in one of Examples and Comparative Examples was coated between release films, and then cut into a size of 10cm × 10m. Thereafter, the release film on one side was removed and then laminated to make a thickness of about 1 mm. Subsequently, the laminate was cut into a circular shape with a diameter of 8 mm, compressed using glass, and then left overnight to prepare a sample. This improved wetting at the interface between layers, and removed bubbles generated during lamination. Subsequently, the sample was placed on a parallel plate, the gap was adjusted, the zero point of Normal & Torque was adjusted, stability of Normal force was confirmed, and then the storage modulus and loss modulus were measured.

In addition, a ratio (G"/G') of the loss modulus (G") to the storage modulus (G') was calculated as the viscoelasticity ratio (Tan delta).

### <Measuring instrument and measuring conditions>

* Measuring instrument: ARES-RDA with forced convection oven, TA Instruments Inc.
* Measuring conditions:
   Geometry: 8 mm parallel plate
   Gap: about 1 mm
   Test type: dynamic strain frequency sweep
   Strain = 10.0 [%], Temperature: 25 °C
   Initial frequency:5.0*10⁻² rad/s, final frequency: 1.0*10² rad/s

The storage modulus, loss modulus, and viscoelasticity ratio measured by the above method are shown in Table 2 below. In addition, a graph showing the viscoelastic ratio at various frequencies of the pressure-sensitive adhesive compositions prepared in Examples 1 to 3 and Comparative Examples 1 to 4 is shown in FIG. 1.

**[Table 2]**

| | Storage modulus(G') | | Loss modulus(G") | | Viscoelasticity ratio (G"/G') | |
|---|---|---|---|---|---|---|
| | Frequency :5.0*10⁻² rad/sec (Unit: Pa) | Frequency :1.0*10² rad/sec (Unit: Pa) | Frequency :5.0*10⁻² rad/sec (Unit: Pa) | Frequency :1.0*10² rad/sec (Unit: Pa) | Frequency :5.0*10⁻² rad/sec | Frequency :1.0*10² rad/sec |
| Ex. 1 | 5,905 | 74,354 | 3,299 | 50,169 | 0.56 | 0.67 |
| Ex. 2 | 5,921 | 86,601 | 3,196 | 65,499 | 0.54 | 0.76 |
| Ex. 3 | 11,434 | 110,891 | 6,120 | 69,376 | 0.54 | 0.62 |
| Comp. Ex. 1 | 13,148 | 113,197 | 6,093 | 67,808 | 0.46 | 0.60 |
| Comp. Ex. 2 | 16,440 | 103,131 | 7,170 | 54,030 | 0.44 | 0.52 |
| Comp. Ex. 3 | 7,473 | 84,786 | 3,166 | 56,705 | 0.42 | 0.67 |
| Comp. Ex. 4 | 15,375 | 100,900 | 7,076 | 56,699 | 0.46 | 0.56 |

Referring to Table 1 and FIG. 1, the pressure-sensitive adhesive compositions of Examples satisfied the viscoelastic ratio (Tan delta, G"/G') measured at a temperature of 25°C in the range of 5.0*10⁻² to 1.0*10² rad/sec of 0.5 to 0.8 in the entire frequency range.

### <Experimental Examples>

### Preparation of adhesive-coated adhesive specimen

Each of the pressure-sensitive adhesive compositions prepared in Examples and Comparative Examples was coated on a silicone-coated release paper, and dried in an oven at about 120 °C for about 1 minute so that a pressure-sensitive adhesive layer had a thickness of about 20 *µ*m. This was laminated with an art paper film to make a paper label and cut into a size of 1 inch × 150 mm to prepare a paper label specimen.

Adhesive properties of the specimens prepared by using the acrylate-based emulsion pressure-sensitive adhesive compositions of Examples and Comparative Examples were tested in the following manner. The results are shown in Table 3 below.

### 1) Loop tack test (N/inch): Room temperature, SUS substrate

Preparing a specimen for a loop
- Specimen size: 25mm × 150mm
- Adherend: Stainless steel plate
- Measuring conditions: 22±2°C, 50±5%RH
- Measuring method: The specimen was formed into a loop and fixed with clamps,
and then attached to a stainless steel plate at a constant speed. After about 5 seconds, the maximum force required for separation in the opposite direction at a measuring speed of about 300 mm/min was measured as loop tack peel strength.

### 2) Loop tack test (N/inch): Room temperature, paper substrate

The test was performed in the same manner as in the above 1) Loop tack test (room temperature, SUS substrate), except that corrugated fiberboard was used as the adherend.

### 3) Loop tack test (N/inch): Low temperature, paper substrate

Preparing a specimen for a loop
- Specimen size: 25mm × 150mm
- Adherend: Corrugated fiberboard
- Measuring conditions:-10±2°C, 50±5%RH
- Measuring method: The specimen in the low temperature chamber was formed into a loop and fixed with clamps, and the temperature and humidity of the chamber were adjusted to the above measuring conditions. Thereafter, the specimen was attached to corrugated fiberboard at a constant speed. After about 5 seconds, the maximum force required for separation in the opposite direction at a measuring speed of about 300 mm/min was measured as loop tack peel strength.

### 4) Peel strength (90°peel) test (N/inch)

The peel strength of the acrylate-based emulsion pressure-sensitive adhesive specimen was measured in accordance with FINAT TEST METHOD NO. 2. Specifically, each adhesive specimen was attached to a stainless steel plate by reciprocating a 2 kg roller once at about 300 mm/min and aged at room temperature for about 20 minutes. Thereafter, the aged adhesive specimen was subjected to 90° peeling at about 300 mm/min to measure the peel strength using a TA Texture Analyzer.

### 5) Holding power (shear)

The holding power test (Shear test) was performed in the following manner.
- Specimen size: 25mm × 25mm
- Adherend: Bright stainless steel plate (Bright SUS, polished and slippery)
- Measuring conditions:22±2°C, 50±5%RH
- Measuring method: The specimen was attached to the adherend by reciprocating a 2 kg roller once, and the holding power was measured without dwell time (measuring speed of 300 mm/min).

After a fixed load of about 1 kg was applied to the bottom of the specimen, the time at which the pressure-sensitive adhesive specimen was separated was measured.

**[Table3]**

| | Loop tack (N/inch) | | | 90° peel (N/inch) | Shear (min) |
|---|---|---|---|---|---|
| | SUS(Room temp.) | Paper (Room temp.) | Paper(Low temp.) | SUS | 0.5in*0.5in, 0.5kq |
| Ex. 1 | 11.5 | 7.1 | 6.2 | 8.1 | 38 |
| Ex. 2 | 12.6 | 7.9 | 8.1 | 8.9 | 42 |
| Ex. 3 | 12.3 | 8.1 | 7.8 | 7.9 | 35 |
| Comp. Ex.1 | 13.7 | 7.5 | 3.2 | 7.3 | 21 |
| Comp. Ex.2 | 9.7 | 5.8 | 5.3 | 6.1 | 25 |
| Comp. Ex. 3 | 7.5 | 4.3 | 6.1 | 4.9 | 100 |
| Comp. Ex. 4 | 10.2 | 9.4 | 3.5 | 9.2 | 430 |

Referring to Table 2, the acrylate-based emulsion pressure-sensitive adhesive compositions of Examples of the present disclosure satisfied the viscoelastic ratio (Tan delta, G"/G') measured at a temperature of 25°C in the range of 5.0*10⁻² to 1.0*10² rad/sec of 0.5 to 0.8. They had a balance between viscosity and elasticity, and exhibited excellent adhesive properties over a wide temperature range including both room temperature and low temperatures.

Meanwhile, Comparative Examples 1 and 4 had relatively excellent adhesion at room temperature, but low adhesion at low temperatures, whereas Comparative Examples 2 and 3 had relatively good adhesion at low temperatures, but low adhesion at room temperature. From this, it can be seen that it is difficult to satisfy the adhesion both at room temperature and low temperatures. On the other hand, it can be seen that the acrylate-based emulsion pressure-sensitive adhesive composition of the present disclosure achieved this by controlling the viscoelasticity ratio within a certain range.

## Claims

1. An acrylate-based emulsion pressure-sensitive adhesive composition, comprising emulsified polymer particles obtained by emulsion polymerization of a monomer mixture containing an alkyl (meth)acrylate-based monomer, a hydroxyalkyl (meth)acrylate-based monomer, an unsaturated carboxylic acid-based monomer, and a vinyl-based monomer; and a polyalkylene glycol diacrylate-based cross-linking agent,
wherein a viscoelastic ratio (Tan delta, G"/G') measured at a temperature of 25°C in the range of 5.0*10⁻² to 1.0*10² rad/sec is 0.5 to 0.8.

2. The acrylate-based emulsion pressure-sensitive adhesive composition of Claim 1,
wherein storage modulus (G') at a temperature of 25°Cand 5.0*10⁻² rad/sec is 2.0*10³Pa or more to 1.0*10⁴Pa or less, and
storage modulus (G') at a temperature of 25°C and 1.0*10² rad/sec is 5.0*10⁴Paor more to 1.5*10⁵Pa or less.

3. The acrylate-based emulsion pressure-sensitive adhesive composition of Claim 1,
wherein loss modulus(G")at a temperature of 25°Cand 5.0*10⁻² rad/sec is 1.0*10³Pa or more to 1.0*10⁴Pa or less, and
loss modulus(G")at a temperature of 25°Cand 1.0*10² rad/sec is 2.0*10⁴Pa or more to 1.0*10⁵Pa or less.

4. The acrylate-based emulsion pressure-sensitive adhesive composition of Claim 1,
wherein the alkyl (meth)acrylate-based monomer comprises at least one selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate.

5. The acrylate-based emulsion pressure-sensitive adhesive composition of Claim 1,
wherein the hydroxyalkyl (meth)acrylate-based monomer comprises at least one selected from the group consisting of hydroxyethyl (meth)acrylate, hydroxypropyl (meth)acrylate, and hydroxybutyl (meth)acrylate.

6. The acrylate-based emulsion pressure-sensitive adhesive composition of Claim 1,
wherein the unsaturated carboxylic acid-based monomer comprises at least one selected from the group consisting of acrylic acid, fumaric acid, maleic acid, itaconic acid, citraconic acid, mesaconic acid, glutaconic acid, and allylmalonic acid.

7. The acrylate-based emulsion pressure-sensitive adhesive composition of Claim 1,
wherein the vinyl-based monomer comprises at least one selected from the group consisting of a vinyl ester-based monomer having a C1 to C5 alkyl group; and an aromatic vinyl-based monomer.

8. The acrylate-based emulsion pressure-sensitive adhesive composition of Claim 7,
wherein the vinyl ester-based monomer comprises at least one selected from the group consisting of vinyl acetate, vinyl propanoate, vinyl butanoate, and vinyl pentanoate.

9. The acrylate-based emulsion pressure-sensitive adhesive composition of Claim 7,
wherein the aromatic vinyl-based monomer comprises at least one selected from the group consisting of styrene, methylstyrene, butylstyrene, chlorostyrene, vinylbenzoic acid, methyl vinylbenzoate, vinylnaphthalene, chloromethylstyrene, hydroxymethylstyrene and divinylbenzene.

10. The acrylate-based emulsion pressure-sensitive adhesive composition of Claim 1, comprising
85 to 90 parts by weight of the alkyl (meth)acrylate-based monomer;
1 to 5 parts by weight of the hydroxyalkyl (meth)acrylate-based monomer;
1 to 5 parts by weight of the unsaturated carboxylic acid-based monomer;
1 to 5 parts by weight of the vinyl-based monomer; and
0.05 to 0.5 parts by weight of the polyalkylene glycol diacrylate-based cross-linking agent,
based on 100 parts by weight of the monomer mixture.

11. The acrylate-based emulsion pressure-sensitive adhesive composition of Claim 10,
wherein a weight ratio of two types of monomers selected from the hydroxyalkyl (meth)acrylate-based monomer, the unsaturated carboxylic acid-based monomer, and the vinyl-based monomer is 0.5 to 2.

12. The acrylate-based emulsion pressure-sensitive adhesive composition of Claim 1,
wherein loop tack at room temperature (22±2°C)on a SUS substrate is 10 to 16 N/inch,
loop tack at room temperature (22±2°C)on a paper substrate is 6 to 10 N/inch, and
loop tack at low temperatures(-10±2°C)on a paper substrate is 5.5 to 10 N/inch.
